(19) Europäisches Patentamt
European Patent Office
Office européen des brevets

(11) **EP 4 607 297 A1**

(12) **EUROPÄISCHE PATENTANMELDUNG**

(43) Veröffentlichungstag:
**27.08.2025 Patentblatt 2025/35**

(21) Anmeldenummer: **24158993.6**

(22) Anmeldetag: **22.02.2024**

(51) Internationale Patentklassifikation (IPC):
***G05B 17/02*** *(2006.01)*

(52) Gemeinsame Patentklassifikation (CPC):
**G05B 17/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH**
**70442 Stuttgart (DE)**

(72) Erfinder:
- **Schmidt, Kevin**
  **71083 Herrenberg (DE)**
- **Vandamme, Antoine**
  **70839 Gerlingen (DE)**

(54) **BERÜCKSICHTIGUNG UNSICHERER TIMINGEFFEKTE IN VERTEILTEN REGELUNGSSYSTEMEN**

(57) Offenbart wird ein computer-implementiertes Verfahren für die Bewertung unsicherer Timingeffekte bei einer Regelung verteilter Systeme auf eine oder mehrere Regelungsgrößen, umfassend Berechnen eines nächsten Zeitschritts in einer Simulation eines intrusiven Surrogatmodells für einen Mittelwert eines Dynamikmodells, wobei ein Mittelwert eines Ausgangs des Dynamikmodells berechnet wird, wobei das Dynamikmodell dafür ausgelegt ist, die eine oder mehreren Regelungsgrößen als den Ausgang zu berechnen; und Berechnen des nächsten Zeitschritts in einer Simulation eines intrusiven Surrogatmodells für eine Abweichung, insbesondere eine Varianz, des Dynamikmodells vom Mittelwert des Dynamikmodells, wobei eine Abweichung, insbesondere die Varianz, des Ausgangs des Dynamikmodells berechnet wird; wobei die Regelung der verteilten Systeme von mindestens einem ersten unsicheren Timingeffekt abhängt, der im Dynamikmodell durch einen ersten unsicheren Parameter abgebildet ist.

**Fig. 1**

EP 4 607 297 A1

**Beschreibung**

Stand der Technik

Die longitudinale Fahrzeugführung mehrerer Fahrzeuge ist ein Beispiel für ein verteiltes Regelungssystem, d.h. ein System mit verteilten Regelfunktionen. Eine spezielle longitudinale Fahrzeugführung ist zum Beispiel das Platooning, bei dem mehrere Fahrzeuge mit Hilfe eines verteilten Regelungssystems - auch als elektronische Deichsel(n) bezeichnet - in sehr geringem Abstand hintereinanderfahren, ohne dass dabei die Verkehrssicherheit beeinträchtigt wird. Verteilte Regelungssysteme werden bisher deterministisch simuliert. In der Realität streuen allerdings einige physikalische Effekte, die stochastisch (d.h. unsicher) sind und auf das verteilte Regelungssystem einen nicht zu vernachlässigenden Einfluss haben. Dabei geht es insbesondere um unsichere Timingeffekte. Insoweit sind deterministische Simulationen verteilter Regelungssysteme unzureichend.

Ein unsicherer Timingeffekt ist zum Beispiel (der) Jitter, womit eine leichte Genauigkeitsschwankung im Übertragungstakt bezeichnet werden kann. Im Falle des Platooning kann Jitter zum Beispiel eine zeitabhängige Streuung der Abtastzeit einer Recheneinheit des verteilten Regelungssystems sein, die die Dynamik eines oder mehrerer Fahrzeuge verwaltet.

Ein weiteres Beispiel für einen unsicheren Timingeffekt ist die Totzeit, womit eine Verzögerung, mit der sich eine Änderung am Eingang in einer Reaktion am Ausgang einer Regelstrecke bemerkbar macht, bezeichnet werden kann. Im Falle des Platooning kann die Totzeit zum Beispiel eine Kommunikationszeit zwischen Recheneinheiten zweier Fahrzeuge umfassen.

Im Rahmen der Produktvirtualisierung ist es erwünscht und notwendig, solche stochastischen Effekte bereits in der Frühauslegephase simulativ zu berücksichtigen. Dadurch kann zum Beispiel Platooning frühzeitig robust ausgelegt werden.

Verfahren und Systeme, um unsichere Timingeffekte in der Simulation verteilter Regelungssysteme zu berücksichtigen, insbesondere um zum Beispiel zeitvariante Jitter-Effekte und unter anderem Totzeiten bei Platooning stochastisch mit einer effizienten Uncertainty Quantification-Methode darzustellen (z.B. basierend auf dem intrusiven Chaos Polynom Verfahren - im Folgenden IPC - abgekürzt) sind nicht bekannt.

Der Offenbarung liegt daher das Problem zugrunde, unsichere Timingeffekte in der Simulation verteilter Regelungssysteme zu berücksichtigen. Insbesondere sollen zeitvariante Jitter-Effekte und unter anderem Totzeiten bei Platooning stochastisch mit einer effizienten Uncertainty Quantification (UQ)-Methode dargestellt werden.

Offenbarung der Erfindung

Ein erster allgemeiner Aspekt der vorliegenden Offenbarung betrifft ein computer-implementiertes Verfahren für die Bewertung unsicherer Timingeffekte bei einer Regelung verteilter Systeme auf eine oder mehrere Regelungsgrößen. Das Verfahren umfasst Berechnen eines nächsten Zeitschritts in einer Simulation eines intrusiven Surrogatmodells für einen Mittelwert eines Dynamikmodells, wobei ein Mittelwert eines Ausgangs des Dynamikmodells berechnet wird. Das Dynamikmodell ist dafür ausgelegt, die eine oder mehreren Regelungsgrößen als (den) Ausgang zu berechnen. Das Verfahren umfasst weiterhin Berechnen des nächsten Zeitschritts in einer Simulation eines intrusiven Surrogatmodells für eine Abweichung, insbesondere für eine Varianz, des Dynamikmodells vom Mittelwert des Dynamikmodells, wobei eine Abweichung, insbesondere die Varianz, des Ausgangs des Dynamikmodells berechnet wird. Die Regelung der verteilten Systeme hängt von mindestens einem ersten unsicheren Timingeffekt ab, der im Dynamikmodell durch einen ersten unsicheren Parameter abgebildet ist.

Die Regelung der verteilten Systeme kann von einem zweiten unsicheren Timingeffekt abhängen, der im Dynamikmodell durch einen zweiten unsicheren Parameter abgebildet ist. Die Regelung der verteilten Systeme kann von weiteren unsicheren Timingeffekten abhängen.

Ein zweiter allgemeiner Aspekt der vorliegenden Offenbarung betrifft ein Computer-System, das dafür ausgelegt ist, das computer-implementierte Verfahren für die Bewertung unsicherer Timingeffekte bei einer Regelung verteilter Systeme auf eine oder mehrere Regelungsgrößen nach dem ersten allgemeinen Aspekt (oder einer Ausführungsform davon) auszuführen.

Ein dritter allgemeiner Aspekt der vorliegenden Offenbarung betrifft ein Computer-Programm, das dafür ausgelegt ist, das computer-implementierte Verfahren für die Bewertung unsicherer Timingeffekte bei einer Regelung verteilter Systeme auf eine oder mehrere Regelungsgrößen nach dem ersten allgemeinen Aspekt (oder einer Ausführungsform davon) auszuführen.

Ein vierter allgemeiner Aspekt der vorliegenden Offenbarung betrifft ein computer-lesbares Medium oder Signal, das das Computer-Programm nach dem dritten allgemeinen Aspekt (oder einer Ausführungsform davon) speichert und/oder enthält.

Das Verfahren nach dem ersten allgemeinen Aspekt (oder einer Ausführungsform davon) ermöglicht es einen oder mehrere unsichere Timingeffekte in der Simulation eines verteilten Regelungssystems in einer effizienten UQ-Methode (z.B. in einem IPC-Verfahren) zu berücksichtigen. Dies ermöglicht effiziente UQ-Analysen die zur Designzeit und/oder zur Laufzeit genutzt werden können. Dadurch können die für ein verteiltes Regelungssystem beteiligten Regler robust ausgelegt und bei Bedarf jederzeit adaptiert werden.

Insbesondere können dank des Verfahrens nach dem ersten allgemeinen Aspekt (oder einer Ausführungsform davon) beim Platooning unsichere Jitter-Effekte in Kombination mit unsicheren Totzeiten bei einem verteilten System auch frühzeitig berücksichtigt werden.

Speziell bei Jitter-Effekten kann auf eine sehr aufwändige Definition eines unsicheren Abtastzeitparameters pro simuliertem Zeitschritt (konventionell z.B. durch Würfeln à la Monte Carlo bestimmt) verzichtet werden. Die longitudinale Fahrzeugführung (wie z.B. Platooning) ist allerdings nur ein Beispiel für ein verteiltes Regelungssystem. Das Platooning Modell kann zunächst zeitdiskret formuliert werden und der Jitter-Effekt als unkorreliertes weißes Rauschen abgebildet werden. Der Jitter-Effekt lässt sich dann mathematisch genauso wie eine in einem zeitkontinuierlichen Zustandsraumdarstellungsmodell als unkorreliertes weißes Rauschen abgebildete Störgröße w(t) behandeln.

Vorteilhaft erweist sich das erhöhte Wissen bei der Anwendung des hier vorgeschlagenen Verfahrens: Im beispielhaften Fall des Platooning, können nämlich bei jedem Zeitschritt aus dem insgesamt möglichen Jitter-Wertebereich (bisher nur ein skalarer Wert aus einer stochastischen Verteilung z.B. bei jedem Zeitschritt oder einmalig am Anfang der Simulation zufällig gezogen) und/oder aus dem insgesamt möglichen Totzeitwertebereich (bisher nur ein skalar Wert aus einer stochastischen Verteilung z.B. bei jedem Zeitschritt oder einmalig am Anfang der Simulation zufällig gezogen) bei jeder Modellausgabegröße (zum Beispiel der relativen Geschwindigkeit und/oder dem Abstandsfehler zwischen zwei Fahrzeugen) sowohl der Mittelwert als auch die Standardabweichung (bisher nur ein skalarer Wert) berechnet werden.

Vorteilhaft erweist sich zudem auch eine Zeitersparnis bei der Anwendung des hier vorgeschlagenen Verfahrens: Die UQ-Aufgaben mit dem IPC-Verfahren lassen sich im Gegensatz zu den konventionellen UQ-Methoden (Standard Monte-Carlo, Latin Hypercube Sampling) mit nur einer Simulation erledigen. Es müssen nicht, wie konventionell, je zufällig gezogener Parameter der Timingeffekte (deterministische) Simulationen durchgeführt werden.

Die Lösung kann zum Beispiel beim Platooning-Entwurf verwendet werden und ermöglicht es, Fahrzeugtrajektorien und/oder Systemvarianzen bei der Funktionsentwicklung in effizienter Weise zu berücksichtigen (Safe-by-Design-Ansatz).

Die effiziente Repräsentation der Timingeffekte ermöglicht es weiterhin, diese im Rahmen des Regelungsverfahrens zu berücksichtigen. Beispielsweise sind stochastische "klassische" Reglerentwürfe und die Anwendung in der modellprädiktiven Regelung denkbar.

In der Systembeschreibung kann eine Zusatzdynamik enthalten sein, welche es auch ermöglicht, korrelierte stochastische Prozesse in der Simulation des verteilten Regelungssystems zu berücksichtigen.

Kurzbeschreibung der Figuren

Fig. 1 illustriert schematisch beispielhafte Ausführungsformen eines computerimplementierten Verfahrens für die Bewertung unsicherer Timingeffekte bei einer Regelung verteilter Systeme auf eine oder mehrere Regelungsgrößen.

Fig. 2a illustriert beispielhafte Regelvorgänge auf einen minimalen Abstandsfehler für zwei Regler mit unterschiedlichen Regelungseinstellungen.

Fig. 2b illustriert beispielhafte Geschwindigkeitsunterschiede zwischen den verteilten Systemen je Regelvorgang aus Fig. 2a.

Fig. 3 illustriert schematisch eine Regelung verteilter Systeme am Beispiel der zumindest longitudinalen Fahrzeugführung, insbesondere von Platooning.

Detaillierte Beschreibung

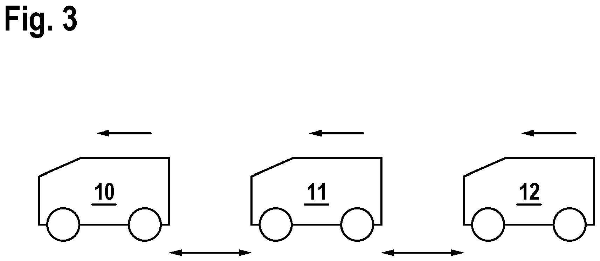

Das in dieser Offenbarung vorgeschlagene Verfahren 100 ist auf die Bewertung unsicherer Timingeffekte (genauer eines oder mehrerer Timingeffekte) bei einer Regelung verteilter Systeme auf eine oder mehrere Regelungsgrößen gerichtet. Eine solche Regelung verteilter Systeme ist beispielhaft und schematisch in Fig. 3 illustriert, wobei die mindestens zwei verteilten Systeme 10, 11, 12 Fahrzeuge sein können, die sich in eine gemeinsame Richtung (in Fig. 3 nach links) und in einem kleinen und möglichst konstanten Abstand zueinander fortbewegen. Hier werden die Fahrzeuge zumindest in einer longitudinalen Richtung (z.B. Achse der momentanen Fahrrichtung oder Tangente der zu fahrenden Trajektorie) geführt. In einer solchen zumindest longitudinalen Fahrzeugführung können die Fahrzeuge (über jeweils eine elektronische Deichsel zwischen zwei benachbarten Fahrzeugen) einen Verband bilden, was auch als platooning bezeichnet wird. Das hier vorgeschlagene Verfahren 100 kann aber für jede Regelung verteilter Systeme gerichtet werden, die von mindestens einem unsicheren Timingeffekt, insbesondere zumindest von einem statischen und/oder einem zeitvarianten Timing-Effekt, abhängt. Neben der zumindest longitudinalen Fahrzeugführung, insbesondere dem Platooning, gibt es viele weitere relevante Situationen, in denen ein Zusammenspiel von unsicheren Timing-Effekten von Bedeutung ist:

Zum Beispiel kann die Regelung der verteilten Systeme dafür ausgelegt sein, fahrerlose Transportfahrzeuge (englisch: automated guided vehicles, AGV) mit Hilfe eines lokalen Netzwerks (z.B. Local Edge, 5G-Netzwerk, 6G-Netzwerk, ...) in einem begrenzten Bereich, insbesondere z.B. in einem Logistikzentrum und/oder einer Produktionsanlage, zu fahren und/oder zu koordinieren.

Als weiteres Beispiel können die verteilten Systeme Roboterarmen in einem lokalen Netzwerk, z.B. in einem Fertigungssystem, umfassen. Die Regelungs- und/oder Steuerungsalgorithmen zumindest dieser Roboterarme sind hier zumindest teilweise ausgelagert (d.h. zumindest teilweise dezentral).

Als weiteres Beispiel kann die Regelung der verteilten Systeme eine Quer- und/oder Längsführung von Fahrzeugen an Verkehrsknotenpunkten und/oder anderen Kontrollzonen, die in ein lokales Edge- und/oder Cloud-System (z.B. eine sogenannte Roadside Unit) ausgelagert sind.

Die Regelung der verteilten Systeme kann zum Beispiel auch in klassischen E/E-Architekturen mit mehreren Steuergeräten in einem Fahrzeug erfolgen.

Die Regelung verteilter Systeme 10, 11, 12 hängt von mindestens einem Timingeffekt ab. Im Kontext dieser Offenbarung sind vor allem Timingeffekte relevant, die nicht jedes Mal gleich sind. Eben solche Timingeffekte können also schwanken. Sie werden hier als unsichere Timingeffekte bezeichnet.

Unsichere Timingeffekte können zum Beispiel zeitvariant sein, d.h. selbst für einen bestimmten Verband von zu regelnden verteilten Systemen, in der fortlaufenden Zeit schwanken. Ein Beispiel hierfür ist (der) Jitter, d.h. eine Genauigkeitsschwankung im Übertragungstakt von Recheneinheiten der verteilten Systeme.

Unsichere Timingeffekte können andererseits zum Beispiel statisch sein, d.h. zwar für einen bestimmten Verband von zu regelnden verteilten Systemen in der fortlaufenden Zeit konstant sein, aber über verschiedene Verbände von zu regelnden verteilten Systemen schwanken. Ein Beispiel hierfür ist eine Zeitverzögerung (englisch: delay) zwischen Recheneinheiten der verteilten Systeme.

Beim Platooning - z.B. in der Form eines connected adaptive cruise control, ACC oder eines gemeinsamen Gruppenstarts - kann die Regelung der verteilten Systeme zum Beispiel von einer Zeitverzögerung (statisch) und Jitter (zeitvariant, z.B. unkorreliert rauschend) abhängen. Im Fokus steht hier die Längsführung der Fahrzeuge, die untereinander Informationen austauschen. Der Informationsaustausch unterliegt allerdings einer unbekannten Kommunikationsverzögerung. Die Dynamik wird durch den Abstandsfehler $e = d_{ref} - d$ und die Relativgeschwindigkeit $\Delta v$ zwischen zwei Fahrzeugen beschrieben. Als Eingangssignal kann hier die Längsbeschleunigung dienen. $d$ ist hier ein Abstand zwischen zwei benachbarten Fahrzeugen und $d_{ref}$ ein Mindestabstand, der idealerweise nicht unterschritten wird.

Dank der hier vorgeschlagenen Anwendung der effizienten Uncertainty Quantification-Analyse (UQ-Analyse) können Regler in Bezug auf ihre Performance auf dem stochastischen System verglichen und/oder optimiert werden: Dies kann zu einer verbesserten Regelungseinstellung - sei es offline, d.h. nachträglich, oder online, d.h. bereits zur Laufzeit der Regelung der verteilten Systeme - und/oder zur Auswahl des am besten geeigneten Reglers aus einer Auswahl bestehender Regler (z.B. $K1$ oder $K2$) genutzt werden. Weiterhin können z.B. modellprädiktive Regler die UQ-Analyse zur Laufzeit nutzen, um iterativ zur Laufzeit optimale Beschleunigungssingale zu bestimmen, die auf das jeweilige Fahrzeug appliziert werden können. Dadurch kann zum Beispiel ein kleinerer Mindestabstand $d_{ref}$ zwischen den Fahrzeugen verlässlich eingeregelt und zum Beispiel aufgrund der besseren Ausnutzung des Windschattens Energie gespart werden.

In einer UQ-Analyse kann die Güte der Regelung der verteilten Systeme mit verschiedenen zur Auswahl stehenden Reglern $K1$ oder $K2$ mit einem initialen Abstandsfehler $e(0)$ bewertet werden. Es ist beispielsweise von Interesse, frühzeitig zu wissen, mit welcher Wahrscheinlichkeit eine potenziell sicherheitskritische Situation mit zu kleinem Abstand $d < d_{ref}$ (bzw. $e > 0$) für ein geschlossenes System eintritt.

Konventionell erforderte der Vergleich zweier Regler $K1$ und $K2$ im Hinblick auf unsichere statische und/oder zeitvariante Timing-Effekte eine große Anzahl von Simulationen für jede der beiden Regelungen (eine Regelung basierend auf Regler $K1$, die andere Regelung basierend auf Regler $K1$), da hierfür bekannte UQ-Methoden nicht eingangsunabhängig sind. Die Beurteilung, ob ein bestimmter Regler die (Sicherheits-)Anforderungen erfüllt, oder die Entscheidung, welcher Regler zu bevorzugen ist, kann daher insbesondere nicht während des Betriebs getroffen werden. Zudem sind die eingangsabhängigen UQ-Methoden sehr aufwändig.

Dank des in dieser Offenbarung vorgeschlagenen Verfahrens 100 kann eine Statistik mit jeweils einer Simulation pro Regler ermittelt werden, was die Effizienz erhöht und insbesondere den Einsatz während der Laufzeit ermöglicht.

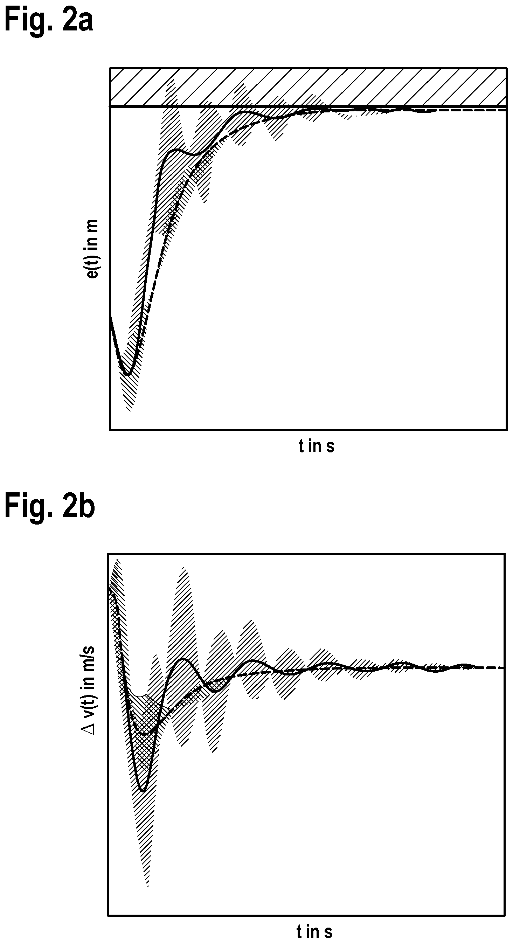

In **Fig. 2a-b** sind beispielhafte Mittelwerte der Ausgänge der beiden Regler $K1$ und $K2$ dargestellt. Die durchgezogene Linie ist hier der zeitliche Verlauf des Mittelwerts für den Regler $K1$, die gestrichelte Linie der zeitliche Verlauf des Mittelwerts für den Regler $K2$. In **Fig. 2a** ist der zeitliche Verlauf des Abstandsfehler $e$ zwischen zwei benachbarten Fahrzeugen dargestellt, in **Fig. 2b** der dazu korrespondierende zeitliche Verlauf der Relativgeschwindigkeit von Fahrzeugen. Beispielhafte 6σ-Vertrauensintervalle (3σ zu beiden Seiten des Mittelwerts) sind der schraffierte Bereich um jeweils einen der Mittelwerte. Der schraffierte Bereich mit Strichen von links unten nach rechts oben ist hier der zeitliche Verlauf des 6 σ -Vertrauensintervalls für den Regler $K$1, der schraffierte Bereich mit Strichen von links oben nach rechts unten der zeitliche Verlauf des 6 σ -Vertrauensintervalls für den Regler K2. Man sieht direkt, dass Regler $K$1 den Mindestabstand $d_{ref}$ schneller als Regler K2 einregelt, aber im Vergleich zur Alternative viele Schwingungen einführt. Darüber hinaus hat die Reaktion des geschlossenen Regelkreises mit Regler $K$1 im Gegensatz zu Regler $K$2 signifikante Anteile mit Abstandsfehlern $e > 0$ (d.h. kleiner als der Mindestabstand $d_{ref}$). Dies stellt ein potenzielles Sicherheitsrisiko dar, insbesondere bei langen Konvois. In diesem Beispiel ist somit Regler $K$2 zu bevorzugen.

Offenbart wird nun ein computer-implementierte Verfahren 100 für die Bewertung unsicherer Timingeffekte (mindestens eines unsicheren Timingeffekts) bei einer Regelung verteilter Systeme 10, 11, 12 auf eine oder mehrere Regelungsgrößen. Die verteilten Systeme bilden ein verteiltes Regelungssystem.

Die Bewertung (z.B. das Prüfen 160, siehe unten) kann zunächst in einer Simulation erfolgen und in der anschließenden Regelung der verteilten Systeme berücksichtigt werden. Hier kann zum Beispiel eine Regelungseinstellung angepasst 170 und/oder ausgewählt 171 werden. Alternativ kann die Bewertung (z.B. das Prüfen 160) in einer Simulation erfolgen, die parallel und insbesondere gleichzeitig zu der Regelung der verteilten Systeme durchgeführt wird. Eine solche Bewertung kann dann sogar online in der Regelung der verteilten Systeme berücksichtigt werden, z.B. durch Anpassen 170, siehe unten, einer Regelungseinstellung.

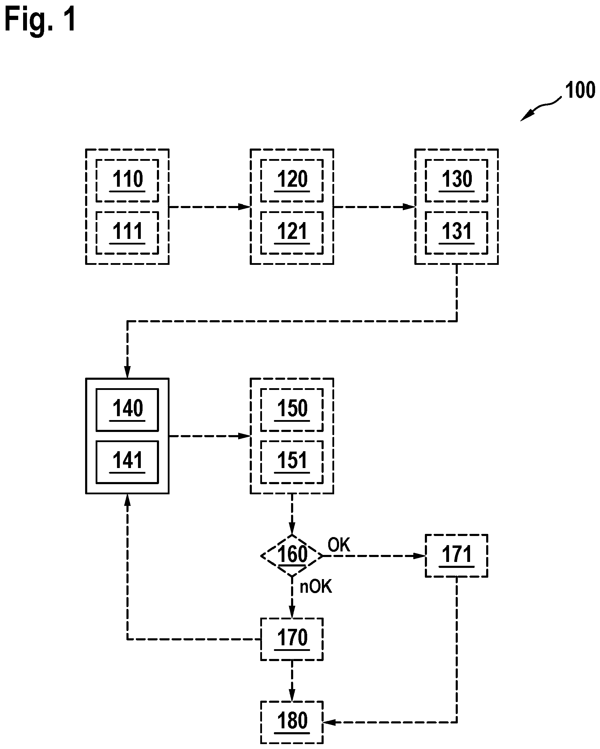

Das Verfahren 100, beispielhaft und schematisch in **Fig. 1** illustriert, umfasst Berechnen 140 eines nächsten Zeitschritts in einer Simulation eines intrusiven Surrogatmodells für einen Mittelwert eines Dynamikmodells, wobei ein Mittelwert eines Ausgangs des Dynamikmodells berechnet wird. Der nächste Zeitschritt basiert auf einer Zeitdiskretisierung des Dynamikmodells. Das Berechnen 140 kann auf dem intrusiven Chaos-Polynom-Verfahren (englisch: polynomial chaos expansion, PCE) basieren.

Das Verfahren 100 umfasst weiterhin, wie in **Fig. 1** illustriert, Berechnen 141 des nächsten Zeitschritts in einer Simulation eines intrusiven Surrogatmodells für eine Abweichung des Dynamikmodells vom Mittelwert des Dynamikmodells, wobei eine Abweichung des Ausgangs des Dynamikmodells berechnet wird. Die Abweichung kann eine Varianz des Ausgangs des Dynamikmodells sein. Das Verfahren 100 kann insbesondere Berechnen 141 des nächsten Zeitschritts in der Simulation eines intrusiven Surrogatmodells für eine Varianz des Dynamikmodells vom Mittelwert des Dynamikmodells umfassen, wobei eine Varianz des Ausgangs des Dynamikmodells berechnet wird. Das Berechnen 141 kann ebenfalls auf dem intrusiven Chaos-Polynom-Verfahren (englisch: polynomial chaos expansion, PCE) basieren.

Das Berechnen 140, 141 umfasst insbesondere das Berechnen von Mittelwerten und Abweichungen vom Mittelwert für den Ausgang des Dynamikmodells. Im beispielhaften Platooning können also z.B. Mittelwerte und Abweichungen vom Mittelwert für den Abstandsfehler und die Relativgeschwindigkeiten ermittelt werden. Solche Abstandsfehler sind in **Fig. 2a** beispielhaft für zwei unterschiedliche Regler gezeigt. Die dazugehörigen Relativgeschwindigkeiten sind in **Fig. 2b** beispielhaft für diese zwei unterschiedliche Regler gezeigt.

Das Dynamikmodell ist dafür ausgelegt, die eine oder mehreren Regelungsgrößen als den Ausgang zu berechnen. Im beispielhaften Platooning können die eine oder mehreren Regelungsgrößen z.B. den Abstandsfehler $e$ und/oder die Relativgeschwindigkeit $\Delta v$ zwischen zwei Fahrzeugen umfassen.

Das Dynamikmodell kann zeitdiskret sein. Ein beispielhaftes zeitdiskretes Dynamikmodell, insbesondere für Platooning kann sein:

$$z_{k+1} = f(z_k, u_k, h + h_k, r)$$

Die Ganzzahlen $k \geq 0$ entsprechen hier den diskreten Zeitpunkten. $f$ ist eine vorgegebene Funktion, die die Dynamik der verteilten Systeme, insbesondere der Fahrzeuge, darstellt. $z_k$ ist ein Zustandsvektor zum Zeitpunkt $k$, wobei $z_0$ ein initialer Zustandsvektor ist. Weiterhin ist $u_k$ ein optionaler Eingangsvektor ebenfalls zum Zeitpunkt k, wobei $u_0$ ein initialer Eingangsvektor ist. Der Eingangsvektor $u_k$ kann zum Beispiel dann entfallen, wenn das Dynamikmodell $f$ bereits den geschlossenen Regelkreis (inklusive Regelgesetz) darstellt. Das Dynamikmodell hat in diesem Beispiel zwei weitere Argumente (das dritte und vierte in der Formel für $z_{k+1}$), über die das Dynamikmodell von zwei unsicheren Parametern abhängen kann. In diesem Beispiel kann $h$ eine nominelle Abtastzeit (z.B. eine Konstante) und $h_k$ ein zeitvarianter (d.h. zeitabhängiger) unsicherer Jitter-Effekt zum Zeitpunkt $k$ darstellen. Weiterhin kann hier $r$ eine unsichere Totzeit darstellen, die z.B. zeitinvariant (d.h. zeitunabhängig) ist. In einem anderen Beispiel kann $f$ nur von einem unsicheren Parameter abhängen (z.B. $h_k$ oder $r$). In wiederum einem anderen Beispiel kann $f$ von einer Vielzahl von unsicheren Parametern abhängen.

Das Verfahren 100 kann, wie z.B. als Option in **Fig. 1** illustriert, Empfangen 110 des Dynamikmodells umfassen.

Die Regelung der verteilten Systeme kann von mindestens einem ersten unsicheren Timingeffekt abhängen, der im Dynamikmodell durch einen ersten unsicheren Parameter abgebildet ist. In dem beispielhaften zeitdiskreten Dynamikmodell kann der erste unsichere Timingeffekt ein unsicherer Jitter-Effekt sein und z.B. durch den ersten unsicheren Parameter $h_k$ abgebildet sein (d.h. parametrisiert werden). Der erste unsichere Parameter, insbesondere für den unsicheren Jitter-Effekt, kann durch eine Wahrscheinlichkeitsverteilung definiert werden. Zum Beispiel kann $h_k$ als unkorreliertes weißes Rauschen mit Mittelwert $\mu_h$ und Standardabweichung $s_h$ bzw. Varianz $\Sigma_h = \Sigma_h^2$ definiert werden.

Die Regelung der verteilten Systeme kann von einem zweiten unsicheren Timingeffekt abhängen, der im Dynamikmodell durch einen zweiten unsicheren Parameter abgebildet ist. In dem beispielhaften zeitdiskreten Dynamikmodell kann der zweite unsichere Timingeffekt eine unsichere Totzeit sein und z.B. durch den zweiten unsicheren Parameter $r$ abgebildet sein (d.h. parametrisiert werden). Der zweite unsichere Parameter, insbesondere für die unsichere Totzeit, kann ebenfalls durch eine Wahrscheinlichkeitsverteilung definiert werden. Zum Beispiel kann r als Gleichverteilung mit unterer Grenze $r_{min}$ und oberer Grenze $r_{max}$ definiert werden.

Insbesondere kann die Regelung der verteilten Systeme von mindestens zwei unsicheren Timingeffekten abhängen., die im Dynamikmodell durch mindestens zwei unsichere Parameter abgebildet sind.

Falls nötig, können in dem Dynamikmodell auch korrelierte unsichere Timingeffekte abgebildet werden. Korrelierte unsichere Timingeffekte können zum Beispiel über eine Zusatzdynamik und/oder durch multivariate Parameter abgebildet werden. Dadurch können auch korrelierte stochastische Prozesse berücksichtigt werden.

Das Verfahren 100 kann, wie z.B. als Option in **Fig. 1** illustriert, Empfangen 111 einer Wahrscheinlichkeitsverteilung für zumindest den ersten unsicheren Parameter, gegebenenfalls auch einer Wahrscheinlichkeitsverteilung für den zweiten unsicheren Parameter oder von Wahrscheinlichkeitsverteilungen je unsicheren Parameter der Vielzahl unsicherer Parameter umfassen.

Zum Beispiel kann der erste unsichere Timingeffekt zeitvariant sein. Der erste unsichere Timingeffekt kann insbesondere ein Jitter-Effekt, insbesondere eine zeitvariante Streuung der Abtastzeit einer Recheneinheit in einem der verteilten Systeme sein.

Zum Beispiel kann der zweite unsichere Timingeffekt statisch sein. Der zweite unsichere Timingeffekt kann insbesondere eine Totzeit in der Kommunikation zwischen zwei oder mehreren Systemen der verteilten Systeme sein.

Das Verfahren 100 kann, wie z.B. als Option in **Fig. 1** illustriert, Festlegen 120 des intrusiven Surrogatmodells für den Mittelwert (allgemeiner Erwartungswert) des Dynamikmodells, insbesondere Festlegen des Mittelwertmodells umfassen. Hierzu kann der erste unsichere Parameter des Dynamikmodells (für jeden Zeitschritt) auf einen Mittelwert (z.B. $\mu_h$ für das weiße Rauschen, allgemeiner Erwartungswert) des ersten unsicheren Parameters eingeschränkt werden. In dem beispielhaften zeitdiskreten Dynamikmodell $f$ können in jedem Zeitschritt $k$ Mittelwerte $m_k$ des Dynamikmodells wie folgt definiert werden:

$$m_{k+1} = f\big(m_k, u_k, h + \mu_h, r\big) \ \ k > 0, \quad m_0 = z_0$$

Das Verfahren 100 kann weiterhin, wie z.B. als Option in **Fig. 1** illustriert, Festlegen 121 des intrusiven Surrogatmodells für die Abweichung (insbesondere Varianz) des Dynamikmodells vom Mittelwert des Dynamikmodells, insbesondere Festlegen des Varianzmodells umfassen. Hierzu kann ausgehend von $V_0 = 0$ zum Beispiel eine Varianz $V_{k+1}$ des Dynamikmodells basierend auf der Varianz (z.B. $\Sigma_h$ für das weiße Rauschen) des ersten unsicheren Parameters in jedem Zeitschritt k wie folgt definiert werden:

$$V_{k+1} = \left.\frac{\partial f}{\partial z_k}\right|_{z_k=m_k,\ h_k=\mu_h} V_k \left.\frac{\partial f}{\partial z_k}\right|^{T}_{z_k=m_k,\ h_k=\mu_h} + \left.\frac{\partial f}{\partial h}\right|_{z_k=m_k,\ h_k=\mu_h} \Sigma_h \left.\frac{\partial f}{\partial h}\right|^{T}_{z_k=m_k,\ h_k=\mu_h}$$

Das hochgestellte T steht hier für die Transposition.

Für den Fall, dass das beispielhafte zeitdiskrete Dynamikmodell $f$ kein viertes Argument hat (d.h. keine Abhängigkeit von r), kann auch in den Formeln für $m_{k+1}$ und $V_{k+1}$ das vierte Argument weggelassen werden.

Im Falle eines zweiten unsicheren Timingeffekts bzw. Parameters kann das Verfahren 100, wie z.B. als Option in **Fig. 1** illustriert, Spezifizieren 130 des intrusiven Surrogatmodells für den Mittelwert des Dynamikmodells, insbesondere Spezifizieren des Mittelwertmodells umfassen. In den Formeln für $m_{k+1}$ kann hierzu r durch ein Polynom in $\xi$ ersetzt werden, das von einem Erwartungswert der Wahrscheinlichkeitsverteilung für den zweiten unsicheren Parameter und z.B. einer Varianz dieser Wahrscheinlichkeitsverteilung abhängt. Im Falle der oben beispielhaft beschriebenen Gleichverteilung kann

$$r = (r_{max} + r_{min})/2 + (r_{max} - r_{min})/2 * \xi$$

verwendet werden.

Das Verfahren 100 kann, wie z.B. als Option in **Fig. 1** illustriert, Spezifizieren 131 des intrusiven Surrogatmodells für die Abweichung (insbesondere Varianz) des Dynamikmodells vom Mittelwert des Dynamikmodells, insbesondere Spezifizieren des Varianzmodells umfassen.

Die für das intrusive Chaos-Polynom-Verfahren benötigten Polynome in $\xi$ können so definiert werden, dass die Mittelwerte $m_k$ des intrusivierten Mittelwertmodells bzw. z.B. die Varianzen $V_{k+1}$ des intrusivierten Varianzmodells durch deren Koeffizienten gegeben sind.

Bei dem intrusiven PCE-Verfahren wird die statistische Verteilung jedes unsicheren Parameters als stochastisches Polynom (sogenanntes "Chaos Polynom") approximiert. Die Wahl der Polynome ist hierbei fest vorgegeben und hängt von der Verteilungsannahme der Parameter ab. Mit dieser Definition lassen sich alle weitere Modellgrößen (zum Beispiel die Modellzustände, -eingänge und - ausgänge) auch als stochastischen Größen darstellen und berechnen. Dies erfordert jedoch, die mathematischen Systemgleichungen dementsprechend um stochastische Effekte zu erweitern und entsprechend zu diskretisieren. Die Vorgehensweise mit dem intrusiven PCE-Verfahren führt zu einem gekoppelten System von Systemgleichungen, welches die Adaption bestehender Simulationsumgebungen erfordert.

Das Verfahren 100 kann, wie z.B. als Option in **Fig. 1** illustriert, Berechnen 150, für den nächsten Zeitschritt, eines erwartbaren maximalen Ausgangs (in einem probabilistischen Sinne, d.h. z.B. +3$\sigma$) des Dynamikmodells basierend auf dem Mittelwert eines Ausgangs des Dynamikmodells und der Abweichung, insbesondere der Varianz des Dynamikmodells vom Mittelwert des Dynamikmodells umfassen.

Alternativ oder zusätzlich kann, wie z.B. als Option in **Fig. 1** illustriert, das Verfahren 100 Berechnen 151, für den nächsten Zeitschritt, eines erwartbaren minimalen Ausgangs (in einem probabilistischen Sinne, d.h. z.B. -3$\sigma$) des Dynamikmodells basierend auf dem Mittelwert eines Ausgangs des Dynamikmodells und der Abweichung, insbesondere der Varianz des Dynamikmodells vom Mittelwert des Dynamikmodells umfassen.

Die Abweichung kann beim Berechnen 150, 151 eine Standardabweichung $\sigma$ oder ein Vielfaches der Standardabweichung sein. Die Standardabweichung lässt sich aus der Wurzel der Varianz ermitteln.

Insbesondere kann, wie z.B. als Option in **Fig. 1** illustriert, das Verfahren 100 Berechnen 150, für den nächsten Zeitschritt, eines erwartbaren maximalen Ausgangs (in einem probabilistischen Sinne, d.h. z.B. +3$\sigma$) des Dynamikmodells basierend auf dem Mittelwert eines Ausgangs des Dynamikmodells und der Abweichung, insbesondere der Varianz des Dynamikmodells vom Mittelwert des Dynamikmodells sowie Berechnen 151, für den nächsten Zeitschritt, eines erwartbaren minimalen Ausgangs (in einem probabilistischen Sinne, d.h. z.B. -3$\sigma$) des Dynamikmodells basierend auf dem Mittelwert eines Ausgangs des Dynamikmodells und der Abweichung, insbesondere der Varianz des Dynamikmodells vom Mittelwert des Dynamikmodells umfassen.

Das Verfahren 100 kann, wie z.B. als Option in **Fig.** 1 illustriert, umfassen: Prüfen 160, zumindest für den nächsten Zeitschritt, ob der erwartbare maximale Ausgang des Dynamikmodells und/oder der erwartbare minimale Ausgang des Dynamikmodells ein vorbestimmtes Kriterium erfüllen, wobei ein Prüfergebnis resultiert. Das Prüfergebnis kann zum Beispiel positiv (OK) oder negativ (nOK) sein.

Das Verfahren 100 kann, wie z.B. als Option in **Fig. 1** illustriert, Anpassen 170 einer Regelungseinstellung bei der Regelung der verteilten Systeme 10 basierend auf dem Prüfergebnis umfassen. Durch das Anpassen 170 kann der Regler optimiert werden.

Alternativ oder zusätzlich kann das Verfahren 100, wie z.B. als Option in **Fig. 1** illustriert, Auswählen 171 der Regelungseinstellung aus einer Vielzahl von Regeleinstellungen basierend auf dem Prüfergebnis umfassen. Jede Regelungseinstellung kann einem Regler zugeordnet sein. Hier kann also eine Vielzahl von Reglern (wie z.B. $K$1 oder $K$2 oben) untersucht werden. Für jeden dieser Regler bzw. Regelungseinstellungen kann das Verfahren 100 durchgeführt werden. Somit kann insbesondere für jeden dieser Regler bzw. Regelungseinstellungen ein Prüfergebnis ermittelt werden. Auf Basis dieser Prüfergebnisse kann die eine Regelungseinstellung, mithin der eine Regler ausgewählt werden 171. Dadurch kann insbesondere der beste Regler ausgewählt werden.

Das Verfahren 100 kann, wie z.B. als Option in **Fig. 1** illustriert, Verwenden 180 der Regelungseinstellung bei der Regelung der verteilten Systeme 10, 11, 12 umfassen. Somit kann zum Beispiel eine Software für die Regelung der verteilten Systeme mit der aus der Simulation ermittelten Regelungseinstellung bedatet und zur Regelung der verteilten Systeme ausgeführt werden. Wie z.B. in **Fig. 1** illustriert, kann die ausgewählte 171 Regelungseinstellung für die Regelung der verteilten Systeme verwendet werden 180.

Alternativ oder zusätzlich kann das Verfahren 100 bereits während der Regelung der verteilten Systeme 10, 11, 12 ausgeführt werden. Die Simulation kann hier also parallel zur Regelung der verteilten Systeme laufen. Der Vorteil besteht hier darin, dass während der Regelung der verteilten Systeme die Regeleinstellung angepasst werden kann, z.B. weil der erwartbare maximale Abstandsfehler $e$ zu groß geworden ist, der Mindestabstand $d_{ref}$ in kritischer Weise unterschritten werden könnte. Dies ermöglicht somit eine stochastische modellprädiktive Regelung der verteilten Systeme zur Laufzeit.

Das Verfahren 100 kann weiterhin eine Sensitivitätsanalyse hinsichtlich mindestens zweier unsicherer Timingeffekte umfassen. Diese Sensitivitätsanalyse kann zum Beispiel auf einer Bestimmung von Sobol-Indices der intrusiven Surrogatmodelle der einzelnen unsicheren Timingeffekte basieren.

Die Regelung der verteilten Systeme kann auf eine longitudinale, laterale und/oder vertikale Bewegungsführung, insbesondere auf Platooning von Fahrzeugen ausgelegt sein.

Insbesondere kann die Regelung der verteilten Systeme zumindest auf eine longitudinale Bewegungsführung, z.B. auf Platooning von Fahrzeugen ausgelegt sein.

Alternativ oder zusätzlich kann die Regelung der verteilten Systeme zumindest auf eine laterale Bewegungsführung ausgelegt sein.

Alternativ oder zusätzlich kann die Regelung der verteilten Systeme zumindest auf eine vertikale Bewegungsführung ausgelegt sein.

Insbesondere kann die Regelung der verteilten Systeme auf eine longitudinale und laterale Bewegungsführung ausgelegt sein.

Insbesondere kann die Regelung der verteilten Systeme auf eine longitudinale, laterale und vertikale Bewegungsführung ausgelegt sein.

Die eine oder die Regelungsgrößen können einen oder mehrere Abstände zwischen den verteilten Systemen, insbesondere zwischen den Fahrzeugen umfassen. Alternativ oder zusätzlich können die eine oder die Regelungsgrößen eine oder mehrere Relativgeschwindigkeiten zwischen den verteilten Systemen umfassen.

Offenbart wird weiterhin ein Computer-System, das dafür ausgelegt ist, das computer-implementierte Verfahren 100 für die Bewertung unsicherer Timingeffekte bei einer Regelung verteilter Systeme 10, 11, 12 auf eine oder mehrere Regelungsgrößen auszuführen. Das Computer-System kann einen Prozessor und/oder einen Arbeitsspeicher umfassen.

Offenbart wird weiterhin ein Computer-Programm, das dafür ausgelegt ist, das computer-implementierte Verfahren 100 für die Bewertung unsicherer Timingeffekte bei einer Regelung verteilter Systeme 10, 11, 12 auf eine oder mehrere Regelungsgrößen auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computer-lesbares Medium oder Signal, das das Computer-Programm speichert und/oder enthält. Das Medium kann z.B. eines von RAM, ROM, EPROM, HDD, SSD, ... umfassen, auf/in dem das Signal gespeichert wird.

**Patentansprüche**

1. Computer-implementiertes Verfahren (100) für die Bewertung unsicherer Timingeffekte bei einer Regelung verteilter Systeme (10, 11, 12) auf eine oder mehrere Regelungsgrößen, umfassend:

   - Berechnen (140) eines nächsten Zeitschritts in einer Simulation eines intrusiven Surrogatmodells für einen Mittelwert eines Dynamikmodells, wobei ein Mittelwert eines Ausgangs des Dynamikmodells berechnet wird, wobei das Dynamikmodell dafür ausgelegt ist, die eine oder mehreren Regelungsgrößen als den Ausgang zu berechnen;
   - Berechnen (141) des nächsten Zeitschritts in einer Simulation eines intrusiven Surrogatmodells für eine Abweichung, insbesondere eine Varianz, des Dynamikmodells vom Mittelwert des Dynamikmodells, wobei eine Abweichung, insbesondere die Varianz, des Ausgangs des Dynamikmodells berechnet wird;

   wobei die Regelung der verteilten Systeme von mindestens einem ersten unsicheren Timingeffekt abhängt, der im Dynamikmodell durch einen ersten unsicheren Parameter abgebildet ist.

2. Verfahren (100) nach Anspruch 1, wobei die Regelung der verteilten Systeme von einem zweiten unsicheren Timingeffekt abhängt, der im Dynamikmodell durch einen zweiten unsicheren Parameter abgebildet ist.

3. Verfahren (100) nach Anspruch 1 oder 2, umfassend:

   - Berechnen (150), für den nächsten Zeitschritt, eines erwartbaren maximalen Ausgangs des Dynamikmodells basierend auf dem Mittelwert eines Ausgangs des Dynamikmodells und der Abweichung, insbesondere der Varianz des Dynamikmodells vom Mittelwert des Dynamikmodells; und/oder
   - Berechnen (151), für den nächsten Zeitschritt, eines erwartbaren minimalen Ausgangs des Dynamikmodells basierend auf dem Mittelwert eines Ausgangs des Dynamikmodells und der Abweichung, insbesondere der Varianz des Dynamikmodells vom Mittelwert des Dynamikmodells.

4. Verfahren (100) nach einem der vorhergehenden Ansprüche, umfassend:

   - Prüfen (160), zumindest für den nächsten Zeitschritt, ob der erwartbare maximale Ausgang des Dynamikmodells und/oder der erwartbare minimale Ausgang des Dynamikmodells ein vorbestimmtes Kriterium erfüllen, wobei ein Prüfergebnis resultiert.

5. Verfahren (100) nach Anspruch 4, umfassend:

   - Anpassen (170) einer Regelungseinstellung bei der Regelung der verteilten Systeme (10) basierend auf dem Prüfergebnis; und/oder
   - Auswählen (171) der Regelungseinstellung aus einer Vielzahl von Regeleinstellungen basierend auf dem Prüfergebnis.

6. Verfahren (100) nach Anspruch 5, umfassend:

   - Verwenden (180) der Regelungseinstellung bei der Regelung der verteilten Systeme, insbesondere wobei das Verfahren (100) während der Regelung der verteilten Systeme (10) ausgeführt wird.

7. Verfahren (100) nach einem der vorhergehenden Ansprüche, wobei der erste unsichere Timingeffekt zeitvariant ist.

8. Verfahren (100) nach Anspruch 7, wobei der erste unsichere Timingeffekt ein Jitter-Effekt, insbesondere eine zeitvariante Streuung der Abtastzeit einer Recheneinheit in einem der verteilten Systeme ist.

9. Verfahren (100) nach einem der vorhergehenden Ansprüche, wobei der zweite unsichere Timingeffekt statisch ist.

10. Verfahren (100) nach einem der vorhergehenden Ansprüche, wobei der zweite unsichere Timingeffekt eine Totzeit in der Kommunikation zwischen zwei oder mehreren Systemen der verteilten Systeme ist.

11. Verfahren (100) nach einem der vorhergehenden Ansprüche, wobei die Regelung der verteilten Systeme zumindest auf eine longitudinale, laterale und/oder vertikale Bewegungsführung, insbesondere auf Platooning von Fahrzeugen ausgelegt ist.

12. Verfahren (100) nach Anspruch 11, wobei die eine oder die Regelungsgrößen einen oder mehrere Abstände zwischen den verteilten Systemen, insbesondere zwischen den Fahrzeugen umfasst.

13. Computer-System, dafür ausgelegt, das computer-implementierte Verfahren (100) für die Bewertung unsicherer Timingeffekte bei einer Regelung verteilter Systeme (10, 11, 12) auf eine oder mehrere Regelungsgrößen nach einem der vorhergehenden Ansprüche auszuführen.

14. Computer-Programm, dafür ausgelegt, das computer-implementierte Verfahren (100) für die Bewertung unsicherer Timingeffekte bei einer Regelung verteilter Systeme (10, 11, 12) auf eine oder mehrere Regelungsgrößen nach einem der Ansprüche 1 bis 12 auszuführen.

15. Computer-lesbares Medium oder Signal, das das Computer-Programm nach Anspruch 14 speichert und/oder enthält.

# Fig. 1

100

110
111

120
121

130
131

140
141

150
151

160  OK  171
nOK

170

180

## Fig. 2a

e(t) in m

t in s

## Fig. 2b

$\Delta$ v(t) in m/s

t in s

Fig. 3

Europäisches
Patentamt

European
Patent Office

Office européen
des brevets

**EUROPÄISCHER RECHERCHENBERICHT**

Nummer der Anmeldung

EP 24 15 8993

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YIN JIANHUA ET AL: "Distributed Stochastic Model Predictive Control With Taguchi's Robustness for Vehicle Platooning", IEEE TRANSACTIONS ON INTELLIGENT TRANSPORTATION SYSTEMS, IEEE, PISCATAWAY, NJ, USA, Bd. 23, Nr. 9, 1. September 2022 (2022-09-01), Seiten 15967-15979, XP011919690, ISSN: 1524-9050, DOI: 10.1109/TITS.2022.3146715 [gefunden am 2022-02-03] * das ganze Dokument * ----- | 1,15 | INV. G05B17/02 |
| A | EP 3 865 966 A1 (VOLKSWAGEN AG [DE]) 18. August 2021 (2021-08-18) * das ganze Dokument * ----- | 1-15 | |
| A | HU XIAORONG ET AL: "Distributed Model Predictive Control for Vehicle Platoon With Mixed Disturbances and Model Uncertainties", IEEE TRANSACTIONS ON INTELLIGENT TRANSPORTATION SYSTEMS, IEEE, PISCATAWAY, NJ, USA, Bd. 23, Nr. 10, 1. Oktober 2022 (2022-10-01), Seiten 17354-17365, XP011922769, ISSN: 1524-9050, DOI: 10.1109/TITS.2022.3153307 [gefunden am 2022-03-22] * das ganze Dokument * ----- | 1-15 | **RECHERCHIERTE SACHGEBIETE (IPC)** G05B G05D |
| A | US 2009/177439 A1 (SAMPLES PAUL K [US] ET AL) 9. Juli 2009 (2009-07-09) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 2. September 2024 | José Luis Meseguer |

**ANHANG ZUM EUROPÄISCHEN RECHERCHENBERICHT
ÜBER DIE EUROPÄISCHE PATENTANMELDUNG NR.**

EP 24 15 8993

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-09-2024

| Im Recherchenbericht angeführtes Patentdokument | Datum der Veröffentlichung | Mitglied(er) der Patentfamilie | Datum der Veröffentlichung |
|---|---|---|---|
| EP 3865966 A1 | 18-08-2021 | CN 113316121 A | 27-08-2021 |
| | | EP 3865966 A1 | 18-08-2021 |
| | | KR 20210102114 A | 19-08-2021 |
| | | US 2021247777 A1 | 12-08-2021 |
| US 2009177439 A1 | 09-07-2009 | AT E530959 T1 | 15-11-2011 |
| | | AU 2007238723 A1 | 25-10-2007 |
| | | BR PI0709494 A2 | 19-07-2011 |
| | | CA 2648221 A1 | 25-10-2007 |
| | | CN 101421679 A | 29-04-2009 |
| | | EP 2008161 A1 | 31-12-2008 |
| | | JP 2009533768 A | 17-09-2009 |
| | | TW 200745802 A | 16-12-2007 |
| | | US 2009177439 A1 | 09-07-2009 |
| | | WO 2007120785 A1 | 25-10-2007 |

Für nähere Einzelheiten zu diesem Anhang : siehe Amtsblatt des Europäischen Patentamts, Nr.12/82